# EUROPEAN PATENT APPLICATION

(11) **EP 4 847 247 A1**
(43) Date of publication of application: **02.12.2026**
(21) Application number: 25782336.9
(22) Date of filing: 29.01.2025
(51) Int. Cl.: B32B 27/36, B29C 55/04, B32B 27/20

(54) **FILM FOR COATING METAL PLATE, RESIN-COATED METAL PLATE, METHOD FOR PRODUCING FILM FOR COATING METAL PLATE, AND METHOD FOR PRODUCING RESIN-COATED METAL PLATE**

(30) Priority: 03.04.2024 JP 2024060436
(71) Applicant: JFE Steel Corporation, Tokyo 100-0011 (JP)
(72) Inventor: UJIHIRA, Tomoyuki, Tokyo 100-0011 (JP); TAKAHASHI, Yuzuru, Tokyo 100-0011 (JP); FUJIMOTO, Soichi, Tokyo 100-0011 (JP); YAMANAKA, Yoichiro, Tokyo 100-0011 (JP)
(74) Representative: Scott, Stephen John
(86) International application number: PCT/JP2025/002858
(87) International publication number: WO 2025/210998

(57) **Abstract**

Provided is a film for coating a metal sheet and a resin-coated metal sheet, both having excellent ink adhesion properties. It is a film for coating a metal sheet mainly composed of a polyester resin, where the film 3 for coating a metal sheet has a multilayer structure consisting of two or more layers, including a first outermost layer 3a and a second outermost layer 3b. The film 3 has a melting point of 230 °C or higher and 260 °C or lower, and the first outermost layer 3a contains 0.1 mass% or more and 15 mass% or less of slip-promoting inorganic particles of silica with an average particle diameter of 0.2 µm or more and 1.0 µm or less. The number of slip-promoting inorganic particles distributed on the surface of the first outermost layer 3a is 400 particles/mm² or more, the surface roughness Ra of the first outermost layer 3a is 0.30 µm or more, and the first outermost layer 3a contains 0.010 mass% or more and less than 1.0 mass% of a polyolefin as a lubricating component.

## Description

### TECHNICAL FIELD

This disclosure relates to a film for coating a metal sheet, a resin-coated metal sheet, a method of producing a film for coating a metal sheet, and a method of producing a resin-coated metal sheet.

### BACKGROUND

Laminated steel sheets in which a thermoplastic resin film is coated on the surface of a metal sheet such as tin-free steel (TFS) or aluminum have been developed and used as a material for metal containers. The thermoplastic resin film is formed by a non-stretching method, a uniaxial stretching method, or a biaxial stretching method, and the laminated steel sheet coated with the film is widely used in the fields of beverage cans and food cans, in which severe forming workability is required.

In recent years, from the viewpoints of resource saving and reduction in material costs, materials used for metal containers, particularly metal sheets and resin coating layers, have been made thinner by imposing severe processing conditions. As a result, the degree of working during can body production has increased, and there is a possibility that the resin coating layer positioned on the outer surface side of the container after forming may be fractured or scraped off. In view of this, there is a demand for material designs capable of suppressing fracture or scraping of the resin coating layer during can body production.

As a technique for suppressing fracture or scraping of the resin coating layer, PTL 1 proposes a method in which a lubricating component is added to a resin coating layer mainly composed of a polyester resin to improve the slidability and scrape resistance of the resin coating layer.

In the fields of beverage cans and food cans, ink printing treatment is applied to the resin coating layer positioned on the outer surface side of the container after forming to improve the design properties of the can body product. When the adhesion between various inks used for printing and the resin coating layer is low, the printing ink may peel off during can body processing, thereby impairing the design properties and aesthetic appearance of the can body. In PTL 1, because the lubricating component added to improve slidability during forming impairs affinity with the ink, attempts have been made to ensure ink adhesion by controlling the amount added and the average particle size of the lubricating component.

### CITATION LIST

### Patent Literature

PTL 1: WO 2019/116706

### SUMMARY

### (Technical Problem)

As described above, ink is applied to the surface of the resin coating layer on the outer surface of a container to improve design properties of the metal container. However, the resin coating layer mainly composed of a polyester resin is not necessarily excellent in affinity with the ink. Furthermore, the lubricating component added to the resin coating layer to improve slidability further deteriorates the affinity with the ink. Therefore, in the method described in PTL 1, the adhesion between the resin coating layer and the ink is low, and the ink may peel off during processing. Accordingly, there is a demand for a resin-coated metal sheet that exhibits excellent adhesion to printing ink while containing a lubricating component.

It could thus be helpful to provide a film for coating a metal sheet and a resin-coated metal sheet, both having excellent ink adhesion properties.

### (Solution to Problem)

As a result of intensive studies, we discovered the following. Conventionally, adhesion to ink has been ensured by controlling the amount added, particle diameter, and dispersed state of the lubricating component contained in the resin coating layer. However, the resin coating layer mainly composed of a polyester resin is not inherently excellent in affinity with ink, and the lubricating component composed of a polyolefin also has low affinity with ink. Therefore, merely adjusting the lubricating component may result in ink peeling even with only slight increases in the severity of processing conditions or printing conditions. Accordingly, we focused on slip-promoting inorganic particles contained in the resin coating layer to prevent blocking between resin coating layers. By adjusting the amount added, particle diameter, surface distribution number, and surface roughness of the slip-promoting inorganic particles, we improved the anchoring effect between the surface of the resin coating layer and the ink, leading to the discovery of the composition conditions for a resin coating layer with excellent ink adhesion properties, thus completing the present disclosure.

We thus provide the following.
[1] A film for coating a metal sheet mainly composed of a polyester resin, wherein,
   the film has a multilayer structure comprising two or more layers, including a first outermost layer and a second outermost layer that are outermost layers;
   the film has a melting point of 230 °C or higher and 260 °C or lower;
   the first outermost layer contains 0.1 mass% or more and 15 mass% or less of slip-promoting inorganic particles of silica with an average particle diameter of 0.2 µm or more and 1.0 µm or less;
   the number of the slip-promoting inorganic particles distributed on a surface of the first outermost layer is 400 particles/mm² or more;
   surface roughness Ra of the first outermost layer is 0.30 µm or more; and
   the first outermost layer contains 0.010 mass% or more and less than 1.0 mass% of a polyolefin as a lubricating component.
[2] The film for coating a metal sheet according to [1], wherein the polyolefin comprises either or both of an acid-modified polyolefin and an oxidized polyolefin.
[3] The film for coating a metal sheet according to [1] or [2], wherein the polyolefin has an acid value of 20 mgKOH/g or more and 90 mgKOH/g or less.
[4] The film for coating a metal sheet according to any one of [1] to [3], wherein the polyolefin has a melting point of 70 °C or higher and 140 °C or lower.
[5] The film for coating a metal sheet according to any one of [1] to [4], wherein the polyolefin has a weight-average molecular weight of 2,000 or more and 50,000 or less.
[6] The film for coating a metal sheet according to any one of [1] to [5], wherein, when the film for coating a metal sheet has a two-layer structure, the second outermost layer, and when the film for coating a metal sheet has a structure including three or more layers, an intermediate layer disposed between the first outermost layer and the second outermost layer, contains 10 mass% or more and 40 mass% or less of coloring inorganic particles.
[7] The film for coating a metal sheet according to any one of [1] to [6], wherein the first outermost layer has a thickness of 1.0 µm or more and 10 µm or less.
[8] The film for coating a metal sheet according to [6] or [7], wherein the second outermost layer or the intermediate layer containing the coloring inorganic particles has a thickness of 10 µm or more and 20 µm or less.
[9] A resin-coated metal sheet, comprising a resin coating layer of the film according to any one of [1] to [8] on at least one surface of the metal sheet.
[10] A method of producing a film for coating a metal sheet, which is a method of producing the film for coating a metal sheet according to any one of [1] to [8], wherein,
   a polyester resin containing the slip-promoting inorganic particles and the polyolefin, which forms the first outermost layer, and a polyester resin forming layers other than the first outermost layer constituting the film for coating a metal sheet are co-extruded using a kneading extruder, formed into a sheet shape through a multilayer die, and discharged;
   the obtained sheet is cooled and solidified on a cooling body, and then
   a laminated film serving as the film for coating a metal sheet is formed by stretching the sheet one or more times under conditions where a stretching temperature is 80 °C or higher and 100 °C or lower and a stretching ratio is 3.5 times or more and 5.0 times or less.
[11] A method of producing a resin-coated metal sheet, which is a method of producing the resin-coated metal sheet according to [9], wherein,
   thermocompression bonding is performed with a laminating roll such that the second outermost layer of the film is brought into adhesion with a heated metal sheet.

### (Advantageous Effect)

According to the present disclosure, it is possible to provide a film for coating a metal sheet and a resin-coated metal sheet, both having excellent ink adhesion properties.

### BRIEF DESCRIPTION OF THE DRAWINGS

In the accompanying drawings:

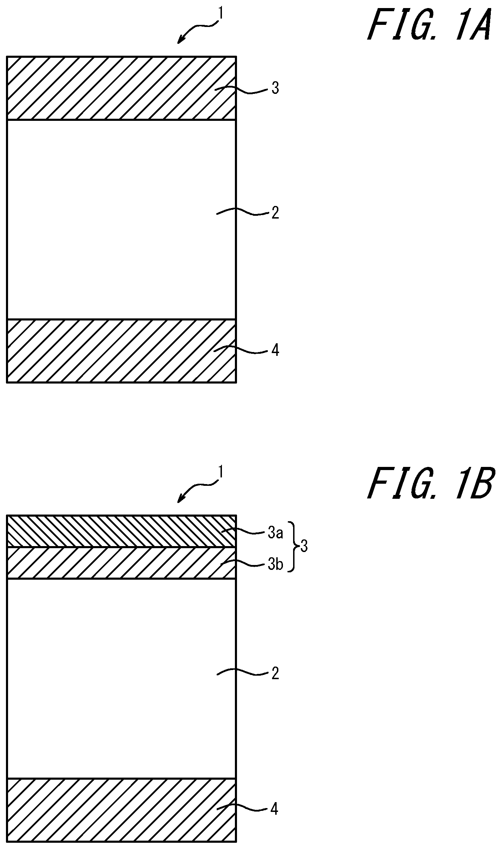

FIGS. 1A and 1B are cross-sectional views illustrating an example of the structure of the resin-coated metal sheet according to the present disclosure.

### DETAILED DESCRIPTION

### (Film for Coating Metal Sheet and Resin-Coated Metal Sheet)

The following describes embodiments of the present disclosure with reference to the drawings. The film for coating a metal sheet according to the present disclosure is a film for coating a metal sheet mainly composed of a polyester resin, where the film for coating a metal sheet has a multilayer structure consisting of two or more layers, including a first outermost layer and a second outermost layer. The film has a melting point of 230 °C or higher and 260 °C or lower, and the first outermost layer contains 0.1 mass% or more and 15 mass% or less of slip-promoting inorganic particles of silica with an average particle diameter of 0.2 µm or more and 1.0 µm or less. The number of slip-promoting inorganic particles distributed on the surface of the first outermost layer is 400 particles/mm² or more, the surface roughness Ra of the first outermost layer is 0.30 µm or more, and the first outermost layer contains 0.010 mass% or more and less than 1.0 mass% of a polyolefin as a lubricating component.

Further, the resin-coated metal sheet according to the present disclosure includes, on at least one surface of a metal sheet, a resin coating layer composed of the above-described film for coating a metal sheet according to the present disclosure.

FIGS. 1A and 1B are cross-sectional views illustrating an example of the structure of the resin-coated metal sheet according to the present disclosure. As illustrated in FIG. 1A, the resin-coated metal sheet 1 includes a metal sheet 2, a resin coating layer (film for coating a metal sheet) 3 formed on the front surface side of the metal sheet 2, and a resin coating layer 4 formed on the back surface side of the metal sheet 2. Although FIGS. 1A and 1B illustrate an example in which the resin-coated metal sheet 1 has the resin coating layer 3 provided on the front surface side of the metal sheet 2 and the resin coating layer 4 provided on the back surface side of the metal sheet 2, the resin coating layers 3 and 4 may be provided only on one surface of the metal sheet 2.

The resin coating layer 3 and the resin coating layer 4 are respectively positioned on the outer surface side and the inner surface side of the container after forming. As illustrated in FIG. 1B, the resin coating layer 3 has a multilayer structure including two or more layers including a first layer 3a and a second layer 3b. The first layer 3a corresponds to the "first outermost layer" of the film for coating a metal sheet according to the present disclosure, and the second layer 3b corresponds to the "second outermost layer." In the illustrated example, the resin coating layer 3 has a two-layer structure. The resin coating layer 4 may also have a multilayer structure similar to that of the resin coating layer 3. When the resin coating layer 4 has a single-layer structure, it is required to have formability capable of withstanding forming of the metal sheet 2.

The metal sheet 2 is preferably a steel sheet. The metal sheet 2 is preferably tinplate or tin-free steel (TFS). In the case of tinplate, it is preferable to use tinplate having a coating amount per side of 0.5 g/m² or more and 15 g/m² or less.

The tin-free steel preferably has, on its surface, a metallic chromium layer having a coating weight per side of 50 mg/m² or more and 200 mg/m² or less, and a chromium oxide layer formed on the metallic chromium layer and having a coating weight in terms of metallic chromium per side of 3 mg/m² or more and 30 mg/m² or less.

The type of the metal sheet 2 is not particularly limited as long as it can be formed into a desired shape, but steel sheets having the following chemical compositions and manufacturing methods are preferred.
(1) A steel sheet obtained by recrystallization annealing by continuous annealing of low-carbon steel having a C (carbon) content of 0.010 mass% or more and 0.10 mass% or less.
(2) A steel sheet obtained by recrystallization annealing and overaging treatment by continuous annealing of low-carbon steel having a C content of 0.010 mass% or more and 0.10 mass% or less.
(3) A steel sheet obtained by recrystallization annealing by box annealing of low-carbon steel having a C content of 0.010 mass% or more and 0.10 mass% or less.
(4) A steel sheet obtained by secondary cold rolling (double reduced rolling) after recrystallization annealing by continuous annealing or box annealing of low-carbon steel having a C content of 0.010 mass% or more and 0.10 mass% or less.
(5) A steel sheet obtained by recrystallization annealing by continuous annealing of interstitial free (IF) steel in which an element capable of fixing solid-solution C, such as Nb or Ti, is added to ultra-low-carbon steel having a C content of 0.003 mass% or less.

The mechanical properties of the steel sheet are not particularly limited as long as the steel sheet can be formed into a desired shape. To obtain more favorable workability and to more favorably maintain can body strength, the yield point (YP) of the steel sheet is preferably 220 MPa or more. The yield point (YP) of the steel sheet is preferably 580 MPa or less. Further, it is preferably a steel sheet having a Lankford value (r-value) of 0.8 or more, where the r-value is an index of plastic anisotropy. Furthermore, it is preferably a steel sheet where the absolute value of the in-plane anisotropy Δr of the r-value is 0.7 or less.

The chemical composition of the steel sheet for satisfying the above mechanical properties is not particularly limited, and the steel sheet may contain, for example, components such as Si, Mn, P, S, Al, and N. The Si content is preferably 0.001 mass% or more. The Si content is preferably 0.1 mass% or less. The Mn content is preferably 0.01 mass% or more. The Mn content is preferably 0.6 mass% or less. The P content is preferably 0.002 mass% or more. The P content is preferably 0.05 mass% or less. The S content is preferably 0.002 mass% or more. The S content is preferably 0.05 mass% or less. The Al content is preferably 0.005 mass% or more. The Al content is preferably 0.100 mass% or less. The N content is preferably 0.0005 mass% or more. The N content is preferably 0.020 mass% or less. The steel sheet may contain other components such as Ti, Nb, B, Cu, Ni, Cr, Mo, and V. However, from the viewpoint of ensuring corrosion resistance and other properties, the total content of these component elements is preferably 0.02 mass% or less.

The thickness of the metal sheet 2 is not particularly limited, and it may be, for example, 0.20 mm or more and 0.25 mm or less.

The polyester resin serving as the main component of the film for coating a metal sheet according to the present disclosure is a polymer composed of dicarboxylic acid units and glycol units. In the present disclosure, the expression "mainly composed of a polyester resin" means that the content of the polyester resin is 90 mass% or more.

Examples of the dicarboxylic acid unit include units derived from aromatic dicarboxylic acids such as terephthalic acid, isophthalic acid, naphthalenedicarboxylic acid, diphenyldicarboxylic acid, diphenylsulfonedicarboxylic acid, diphenoxyethanedicarboxylic acid, 5-sodium sulfoisophthalic acid, and phthalic acid; aliphatic dicarboxylic acids such as oxalic acid, succinic acid, adipic acid, sebacic acid, dimer acid, maleic acid, and fumaric acid; alicyclic dicarboxylic acids such as cyclohexanedicarboxylic acid; and oxycarboxylic acids such as p-oxybenzoic acid.

Examples of the glycol unit include units derived from aliphatic glycols such as ethylene glycol, propanediol, butanediol, pentanediol, hexanediol, and neopentyl glycol; alicyclic glycols such as cyclohexanedimethanol; aromatic glycols such as bisphenol A and bisphenol S; and diethylene glycol.

A plurality of the above-described dicarboxylic acids and glycols may be used in combination within a range that does not impair heat resistance and workability.

The resin coating layer 3 has a melting point of 230 °C or higher and 260 °C or lower. When the melting point of the resin coating layer 3 is 230 °C or higher, softening of the resin during forming can be suitably prevented, and occurrence of fracture or scraping can be more suitably prevented. Further, when the melting point of the resin coating layer 3 is 260 °C or lower, the crystallinity of the contained polyester resin is more suitable, and occurrence of fracture or scraping in the resin coating layer 3 during forming can be more suitably prevented. The melting point of the resin coating layer 3 is preferably 235 °C or higher, and more preferably 240 °C or higher. The melting point of the resin coating layer 3 is preferably 258 °C or lower, and more preferably 255 °C or lower.

The melting point of the resin coating layer 3 is measured according to the following method. Specifically, the resin coating layer 3 is measured using a differential scanning calorimeter, and, among the obtained heat flow data, the peak top temperature of an endothermic peak in the range of 200 °C to 280 °C is defined as the melting point.

In the resin coating layer 3, the first layer 3a contains silica as slip-promoting inorganic particles. By containing silica as the slip-promoting inorganic particles in the first layer 3a, it is possible to prevent blocking when the film for coating a metal sheet according to the present disclosure is wound into a roll and to improve film unwinding properties during lamination. Furthermore, it is possible to improve film conveyability during film formation and lamination. Silica having excellent film-forming properties, slidability, and anti-blocking properties is used as the slip-promoting inorganic particles.

The content of the slip-promoting inorganic particles in the first layer 3a is 0.1 mass% or more and 15 mass% or less in terms of solid content. When the content of the slip-promoting inorganic particles in the first layer 3a is less than 0.1 mass%, the anti-blocking properties of the film are poor, and the films may block each other when the film is wound into a roll. In addition, slidability during film formation conveyance and lamination conveyance is poor, and wrinkles may be introduced during conveyance. Furthermore, fine irregularities cannot be formed on the film surface and an anchoring effect with the ink cannot be obtained, resulting in poor ink adhesion properties. The content of the slip-promoting inorganic particles is preferably 5.1 mass% or more, and more preferably 10.1 mass% or more. On the other hand, when the content of the slip-promoting inorganic particles in the first layer 3a exceeds 15 mass%, the film may laterally slip during film formation conveyance and lamination conveyance, and scratches may be introduced into the film. Furthermore, scraping of the film may occur during forming, originating from aggregated slip-promoting inorganic particles. The content of the slip-promoting inorganic particles in the first layer 3a is preferably 13 mass% or less.

The average particle diameter of the slip-promoting inorganic particles in the first layer 3a is 0.2 µm or more and 1.0 µm or less. When the average particle diameter of the slip-promoting inorganic particles in the first layer 3a is less than 0.2 µm, the slipperiness of the film surface is poor, and the films may block each other when the film is wound into a roll. Poor film unwinding properties during lamination may cause scratches or wrinkles in the film. In addition, slidability during film formation conveyance and lamination conveyance is poor, and wrinkles may be introduced during conveyance. Furthermore, appropriate irregularities cannot be formed on the film surface and an anchoring effect with the ink cannot be obtained, resulting in poor ink adhesion properties. Further, when the average particle diameter of the slip-promoting inorganic particles in the first layer 3a exceeds 1.0 µm, fine irregularities cannot be formed on the film surface, and an anchoring effect with the ink cannot be obtained, resulting in poor ink adhesion properties. Furthermore, scraping of the film may occur during forming, originating from coarse slip-promoting inorganic particles. The average particle diameter of the slip-promoting inorganic particles in the first layer 3a is preferably 0.3 µm or more, and more preferably 0.4 µm or more. The average particle diameter of the slip-promoting inorganic particles in the first layer 3a is preferably 0.9 µm or less, and more preferably 0.8 µm or less. The average particle diameter of the slip-promoting inorganic particles can be measured, for example, by the following method. The surface of the resin coating layer of the resin-coated metal sheet is observed at room temperature in five fields of view (field area: 1 µm × 1 µm) using a chemical force microscope (CFM). For arbitrary 20 observed slip-promoting inorganic particles in each field of view, the particle diameter is calculated from the measured major axis and minor axis using the following formula (1), and the average value thereof (average value of 5 fields × 20 points = 100 points) is taken as the average particle diameter of the slip-promoting inorganic particles. When fewer than 20 slip-promoting inorganic particles are observed in a field of view, all slip-promoting inorganic particles in the field are calculated, and the average value thereof is used.$\left(Particle diameter\right) = {\left\{\left(major axis\right)\times \left(minor axis\right)\right\}}^{∧} 1 / 2$ (1)

The number of slip-promoting inorganic particles distributed on the surface of the first layer 3a is 400 particles/mm² or more. When the number of slip-promoting inorganic particles distributed on the surface of the first layer 3a is less than 400 particles/mm², sufficient fine irregularities cannot be formed on the film surface, and a sufficient anchoring effect with the ink cannot be obtained, which may result in poor ink adhesion properties. The number of slip-promoting inorganic particles distributed on the surface of the first layer 3a is preferably 450 particles/mm² or more, and more preferably 500 particles/mm² or more.

The surface roughness Ra of the first layer 3a is 0.30 µm or more. When the surface roughness Ra of the first layer 3a is less than 0.30 µm, sufficient fine irregularities cannot be formed on the film surface, and therefore a sufficient anchoring effect with the ink cannot be obtained, which may result in poor ink adhesion properties. The surface roughness Ra of the first layer 3a is preferably 0.40 µm or more, and more preferably 0.50 µm or more.

In the resin coating layer 3, the first layer 3a contains a polyolefin as a lubricating component. By containing a polyolefin as a lubricating component in the first layer 3a, excellent slidability and scrape resistance can be ensured, and fracture or scraping of the resin coating layer during can body forming can be suppressed. A polyolefin having excellent film-forming properties and dispersibility and having a melting point within an appropriate range is used as the lubricating component. In addition, a polyolefin having a polar group is used to ensure sufficient affinity with the polyester resin serving as the main component of the resin coating layer 3. Examples of the polyolefin having a polar group include acid-modified polyolefins such as ethylene-maleic anhydride copolymers, and oxidized polyolefins such as oxidized polyethylene. A combination of a plurality of types of polyolefins may be used as the polyolefin.

The polyolefin includes at least one of an acid-modified polyolefin and an oxidized polyolefin. This is because when the polyolefin is at least one of an acid-modified polyolefin and an oxidized polyolefin, the polyolefin has a polar group and a high acid value, thereby improving affinity with the resin coating layer 3 and affinity between the first layer 3a and the printing ink. The polyolefin may be a mixture of an acid-modified polyolefin and an oxidized polyolefin.

The content of the polyolefin in the first layer 3a is 0.010 mass% or more and less than 1.0 mass% in terms of solid content. When the content of the polyolefin in the first layer 3a is less than 0.010 mass%, sufficient slidability and scrape resistance cannot be ensured during forming, and fracture or scraping may occur in the resin coating layer 3. Further, when the content of the polyolefin in the first layer 3a is 1.0 mass% or more, scraping may occur in the resin coating layer 3 during forming, originating from coarse dispersed particles of the polyolefin. The content of the polyolefin in the first layer 3a is preferably 0.050 mass% or more, and more preferably 0.10 mass% or more. The content of the polyolefin in the first layer 3a is preferably 0.80 mass% or less, and more preferably 0.60 mass% or less.

The acid value of the polyolefin is preferably 20 mgKOH/g or more. The acid value of the polyolefin is preferably 90 mgKOH/g or less. When the acid value of the polyolefin is 20 mgKOH/g or more, sufficient affinity between the resin coating layer 3 and the printing ink can be ensured, and adhesion of the printing ink can be improved. When the acid value of the polyolefin is 90 mgKOH/g or less, the polyolefin is not compatible with the resin coating layer 3, and therefore more favorable slidability and scrape resistance can be ensured during forming. In this case, occurrence of fracture or scraping in the resin coating layer 3 can be more suitably prevented. The acid value of the polyolefin is more preferably 25 mgKOH/g or more, and still more preferably 30 mgKOH/g or more. The acid value of the polyolefin is more preferably 80 mgKOH/g or less, and still more preferably 70 mgKOH/g or less. The acid value of the polyolefin is measured according to the method described in Examples section below.

The melting point of the polyolefin is preferably 70 °C or higher. The melting point of the polyolefin is preferably 140 °C or lower. When the melting point of the polyolefin is 70 °C or higher, sufficient printing ink adhesion can be ensured without concentration of the polyolefin on the surface of the resin coating layer 3 even during heat treatment, which is applied in the lamination process and during forming of the resin-coated metal sheet. Further, when the melting point of the polyolefin is 140 °C or lower, more favorable slidability and scrape resistance can be ensured during forming, and occurrence of fracture or scraping in the resin coating layer 3 can be more suitably prevented. The melting point of the polyolefin is preferably 85 °C or higher, and more preferably 95 °C or higher. The melting point of the polyolefin is preferably 135 °C or lower, and more preferably 125 °C or lower. The melting point of the polyolefin is measured according to the method described in Examples section below.

The weight-average molecular weight of the polyolefin is preferably 2,000 or more. The weight-average molecular weight of the polyolefin is preferably 50,000 or less. When the weight-average molecular weight of the polyolefin is 2,000 or more, concentration of the polyolefin on the surface of the resin coating layer 3 can be more suitably prevented, and ink adhesion can be further improved. When the weight-average molecular weight of the polyolefin is 50,000 or less, more favorable slidability and scrape resistance can be ensured during forming, and occurrence of fracture or scraping in the resin coating layer 3 can be more suitably prevented. The weight-average molecular weight of the polyolefin is more preferably 3,000 or more, and still more preferably 3,500 or more. The weight-average molecular weight of the polyolefin is more preferably 45,000 or less, and still more preferably 40,000 or less. The weight-average molecular weight of the polyolefin is measured according to the method described in Examples section below.

The resin coating layer 3 may be required to be white so that the design properties and aesthetic appearance of the can body after printing can be improved. In this case, when the resin coating layer 3 has a two-layer structure, the second layer 3b of the resin coating layer 3, and when the film for coating a metal sheet has a structure of three or more layers, an intermediate layer (not illustrated) disposed between the first layer 3a and the second layer 3b, preferably contains coloring inorganic particles. This is because the resin coating layer 3 can be made white when the second layer 3b or the intermediate layer contains coloring inorganic particles.

The second layer 3b or the intermediate layer preferably contains 10 mass% or more of coloring inorganic particles in terms of solid content. The second layer 3b or the intermediate layer preferably contains 40 mass% or less of coloring inorganic particles in terms of solid content. When the content of the coloring inorganic particles contained in the second layer 3b or the intermediate layer is 10 mass% or more, sufficient whiteness can be ensured. When the content of the coloring inorganic particles contained in the second layer 3b or the intermediate layer is 40 mass% or less, occurrence of fracture or scraping in the resin coating layer 3 can be more suitably prevented even under severe processing conditions. The content of the coloring inorganic particles contained in the second layer 3b or the intermediate layer is more preferably 12 mass% or more, and still more preferably 15 mass% or more. The content of the coloring inorganic particles contained in the second layer 3b or the intermediate layer is more preferably 35 mass% or less, and still more preferably 30 mass% or less. When the intermediate layer has a structure including two or more layers, it is sufficient that the content of the coloring inorganic particles contained in the intermediate layer as a whole falls within the above range, and it is not necessary that all layers constituting the intermediate layer contain coloring inorganic particles.

The coloring inorganic particles contained in the second layer 3b or the intermediate layer are not particularly limited. The coloring inorganic particles are preferably titanium oxide. The titanium oxide is preferably rutile-type titanium oxide having a purity of 90 % or more. When the coloring inorganic particles contained in the second layer 3b or the intermediate layer are the titanium oxide, the titanium oxide exhibits good dispersibility when the polyester resin and the titanium oxide are mixed, thereby improving the design properties and aesthetic appearance of the exterior with uniform whiteness.

The thickness of the first layer 3a is preferably 1.0 µm or more. The thickness of the first layer 3a is preferably 10 µm or less. When the thickness of the first layer 3a falls within the above range, more favorable slidability and scrape resistance can be ensured during forming, and occurrence of fracture or scraping in the resin coating layer 3 can be more suitably prevented. In addition, the surface distribution number and surface roughness Ra of the slip-promoting inorganic particles contained in the first layer 3a are suitable, and ink adhesion is improved by the anchoring effect with the ink. The thickness of the first layer 3a is more preferably 1.2 µm or more, and still more preferably 1.5 µm or more. The thickness of the first layer 3a is more preferably 9.0 µm or less, and still more preferably 8.0 µm or less. The thickness of the first layer 3a is measured according to the method described in Examples section below.

The thickness of the coloring inorganic particle-containing layer, which is the second layer 3b or the intermediate layer containing coloring inorganic particles, is preferably 10 µm or more. The thickness of the coloring inorganic particle-containing layer is preferably 20 µm or less. When the thickness of the coloring inorganic particle-containing layer falls within the above range, it is unnecessary to vary the thickness of the first layer 3a, and the surface distribution number and surface roughness Ra of the slip-promoting inorganic particles are suitable, thereby improving ink adhesion by the anchoring effect with the ink. In addition, suitable whiteness is obtained after can body forming, which improves the design properties and aesthetic appearance after ink printing. The thickness of the coloring inorganic particle-containing layer is more preferably 12 µm or more, and still more preferably 14 µm or more. The thickness of the coloring inorganic particle-containing layer is more preferably 18 µm or less, and still more preferably 16 µm or less. The thickness of the coloring inorganic particle-containing layer is measured according to the method described in Examples section below.

By using the above-described resin-coated metal sheet, it is possible to produce a metal container having excellent adhesion between the surface of the resin coating layer and the ink. The metal container may be produced according to a conventional method.

### (Method of Producing Film for Coating Metal Sheet)

The method of producing a film for coating a metal sheet according to the present disclosure is as follows. A polyester resin containing slip-promoting inorganic particles and a polyolefin, which forms the first outermost layer, and a polyester resin forming layers other than the first outermost layer constituting the film for coating a metal sheet are co-extruded using a kneading extruder, formed into a sheet shape through a multilayer die, and discharged. After the obtained sheet is cooled and solidified on a cooling body, a laminated film serving as the film for coating a metal sheet is formed by stretching the sheet one or more times under conditions where the stretching temperature is 80 °C or higher and 100 °C or lower and the stretching ratio is 3.5 times or more and 5.0 times or less.

First, slip-promoting inorganic particles and a polyolefin are added to a resin mainly composed of a polyester resin to incorporate slip-promoting inorganic particles into the first outermost layer.

The method of adding the slip-promoting inorganic particles to the polyester resin is not particularly limited. A preferred method is one in which a masterbatch is prepared in advance by dispersing the slip-promoting inorganic particles at a high concentration in the resin using a kneading extruder, and, during film formation, resin pellets and the masterbatch are mixed at a predetermined ratio and introduced into the kneading extruder.

A method similar to that used for the slip-promoting inorganic particles is also preferred when incorporating the polyolefin into the first outermost layer. Specifically, a masterbatch is prepared in advance by dispersing the polyolefin at a high concentration in the resin using a kneading extruder, and, during film formation, resin pellets and the masterbatch are mixed at a predetermined ratio and introduced into the kneading extruder.

Further, a method similar to that used for the slip-promoting inorganic particles is also preferred when incorporating coloring inorganic particles into the second outermost layer or the intermediate layer. Specifically, a masterbatch is prepared in advance by dispersing the coloring inorganic particles at a high concentration in the resin using a kneading extruder, and, during film formation, resin pellets and the masterbatch are mixed at a predetermined ratio and introduced into the kneading extruder.

When mixing the resin pellets and the masterbatch, the extrusion temperature is preferably set higher than the melting point of the resin pellets. In one example, the mixing is preferably performed at an extrusion temperature of 270 °C or higher.

A mixture of the polyester resin, slip-promoting inorganic particles, and polyolefin forming the first outermost layer, and a mixture of the resin and coloring inorganic particles forming the second outermost layer or the intermediate layer, are co-extruded and formed into a sheet shape through a multilayer T-die and discharged. The obtained sheet is then extruded onto a cooling body such as a cast drum. By cooling and solidifying the extruded sheet, an unstretched laminated film is obtained.

After the unstretched laminated film is prepared, the film is stretched one or more times to obtain a resin film. The stretching temperature is preferably 80 °C or higher. The stretching temperature is preferably 100 °C or lower. When the stretching temperature falls within the above range, fusion bonding and breakage of the film during film formation can be suppressed, and the dispersed states of the slip-promoting inorganic particles and the polyolefin can also be maintained within an appropriate range. The stretching temperature is more preferably 85 °C or higher, and still more preferably 88 °C or higher. The stretching temperature is more preferably 98 °C or lower, and still more preferably 96 °C or lower.

Further, the stretching ratio during stretching is preferably 3.5 times or more. The stretching ratio during stretching is preferably 5.0 times or less. When the stretching ratio falls within the above range, breakage during film formation can be suppressed, and occurrence of thickness unevenness can be suppressed while maintaining the film thickness within an appropriate range. Furthermore, the dispersed states of the slip-promoting inorganic particles and the polyolefin can be maintained within an appropriate range. The stretching ratio is more preferably 3.8 times or more, and still more preferably 4.0 times or more. The stretching ratio is more preferably 4.8 times or less, and still more preferably 4.6 times or less.

### (Method of Producing Resin-Coated Metal Sheet)

The method of producing a resin-coated metal sheet according to the present disclosure is the above-described method of producing a resin-coated metal sheet according to the present disclosure, where thermocompression bonding is performed with a laminating roll such that the second outermost layer of the film for coating a metal sheet according to the present disclosure is brought into adhesion with a heated metal sheet.

As described above, the film for coating a metal sheet produced with the method of producing a film for coating a metal sheet according to the present disclosure is heated to a temperature equal to or higher than the melting start temperature and thermocompression-bonded to the metal sheet 2 by a laminating roll (thermocompression film lamination method). The temperature of the metal sheet 2 is preferably 260 °C or higher. The temperature of the metal sheet 2 is preferably 290 °C or lower. When the temperature of the metal sheet 2 falls within the above range, adhesion between the film and the metal sheet 2 is improved, and fusion bonding of the film to the laminating roll can be suppressed. The temperature of the metal sheet 2 is more preferably 265 °C or higher, and still more preferably 270 °C or higher. The temperature of the metal sheet 2 is more preferably 288 °C or lower, and still more preferably 285 °C or lower.

Further, the temperature of the laminating roll is preferably 90 °C or higher. The temperature of the laminating roll is preferably 120 °C or lower. When the temperature of the laminating roll falls within the above range, fusion bonding of the film to the laminating roll can be suppressed. The temperature of the laminating roll is more preferably 92 °C or higher, and still more preferably 95 °C or higher. The temperature of the laminating roll is more preferably 118 °C or lower, and still more preferably 116 °C or lower. This thermocompression film lamination method is advantageous in that manufacturing costs can be reduced and production can be achieved with energy savings.

Production conditions other than those described above may follow conventional methods.

### EXAMPLES

The following describes examples of the present disclosure, but the present disclosure is not limited to the following examples.

Tin-free steel (TFS) having a sheet thickness of 0.22 mm, a metallic chromium layer amount of 120 mg/m² per side, a chromium oxide layer amount of 10 mg/m² per side in terms of metallic chromium, and a temper grade of T3CA was used as a metal sheet 2. The mechanical properties of the metal sheet 2 were as follows: YP of 400 MPa, r-value of 1.0, and Δr of 0.5. Further, using the resins, silica, polyolefins, and titanium oxide listed in Table 1, resin films (films for coating a metal sheet) having a multilayer structure were formed by a uniaxial stretching method. Subsequently, the metal sheet 2 was heated, and the resin film was thermocompression-bonded as the resin coating layers 3 and 4 to both the front surface and the back surface of the metal sheet 2 by a thermocompression film lamination method.

When thermocompression-bonding the resin film to the metal sheet 2, the temperature of the metal sheet 2 was controlled to 260 °C or higher and 290 °C or lower, and the temperature of the laminating roll was controlled to 90 °C or higher and 120 °C or lower. Under these conditions, after 0.5 seconds to 1.0 second following thermocompression bonding, water cooling was performed in a water-cooling tank at 60 °C, whereby the resin coating layers 3 and 4 of Examples 1 to 25 and Comparative Examples 1 to 13 were coated on both surfaces of the metal sheet 2. The first outermost layer 3a contained silica and polyolefin in the amounts listed in Tables 1 and 2. The coloring inorganic particle-containing layer contained titanium oxide in the amounts listed in Tables 1 and 2. The coating conditions are listed in Tables 1 and 2 below.

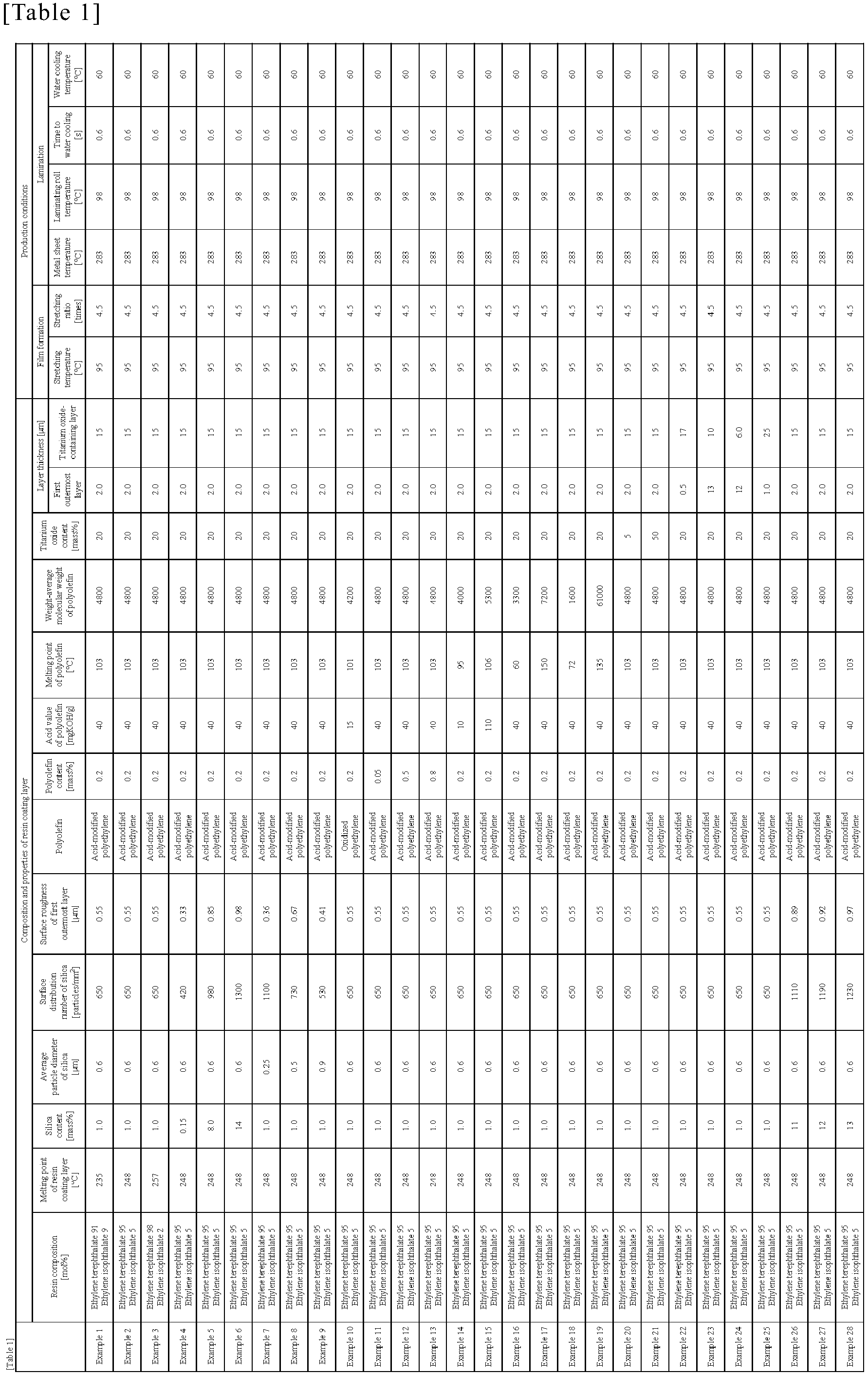

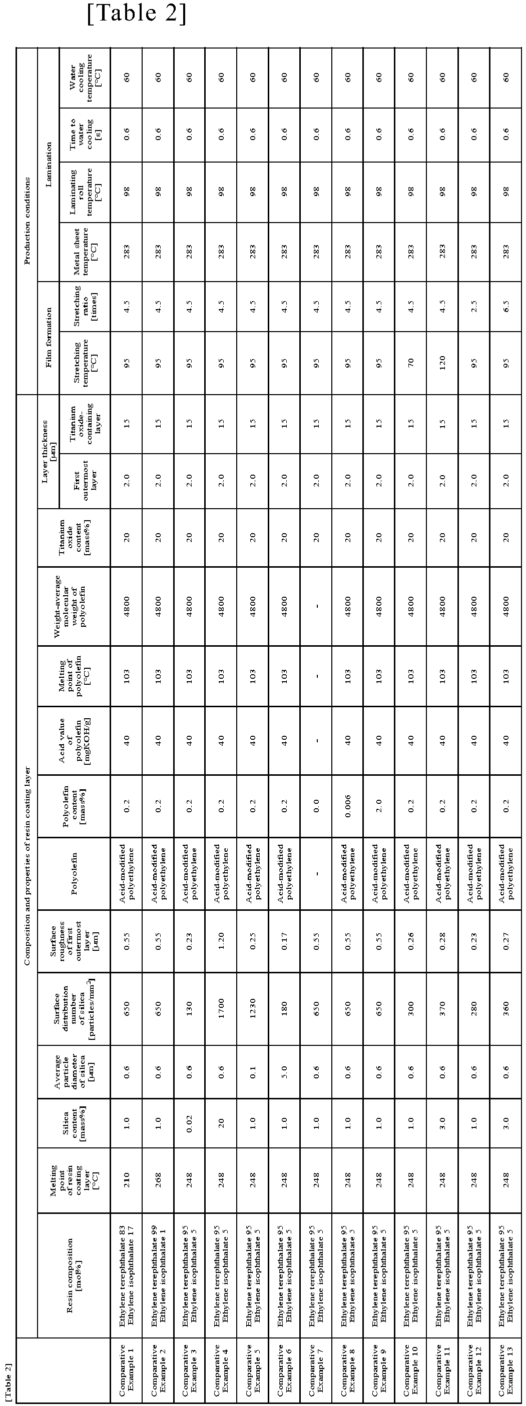

For the resin-coated metal sheet 1 produced by the above method, the melting points of the resin coating layers 3 and 4, the number of slip-promoting inorganic particles distributed on the surface of the first outermost layer 3a, the surface roughness Ra of the first outermost layer 3a, the acid value of the polyolefin, the melting point of the polyolefin, the weight-average molecular weight of the polyolefin, and the thicknesses of the respective layers of the resin coating layers 3 and 4 were measured by the following methods.

### (1) Melting Point of Resin Coating Layer

The resin-coated metal sheet 1 was immersed in a mixed solution of concentrated hydrochloric acid (30 mass%) and distilled water at a ratio of 1:1 at room temperature, and the metal sheet 2 was dissolved to peel off the resin coating layers 3 and 4. Subsequently, the peeled resin coating layers 3 and 4 were measured using a differential scanning calorimeter (DSCQ100 manufactured by TA Instruments) under conditions where the atmospheric gas was N₂ with a flow rate of 50 ml/min, the temperature range was from room temperature to 290 °C, and the heating rate was 10 °C/min. Among the obtained heat flow data, the peak top temperature of an endothermic peak in the range of 200 °C to 280 °C was defined as the melting point.

### (2) Number of Slip-promoting Inorganic Particles Distributed on First Outermost Layer

After osmium (Os) vapor deposition was applied to the surface of the resin-coated metal sheet 1 for antistatic purposes, secondary electron image observation was performed using a low-acceleration scanning electron microscope (GeminiSEM 300 manufactured by Carl Zeiss) under conditions where the observation magnification was 1000×, the accelerating voltage was 1 kV, and the aperture was 20 µm. From the obtained secondary electron images, the number of surface protrusions derived from slip-promoting inorganic particles distributed on the surface was counted and converted per unit area (mm²), thereby calculating the number of slip-promoting inorganic particles distributed on the surface of the first outermost layer 3a.

### (3) Surface Roughness Ra of First Outermost Layer

Using a contact-type surface roughness measuring instrument SJ-210 manufactured by Mitutoyo Corporation, the surface roughness Ra of the surface of the resin-coated metal sheet 1 (that is, the first outermost layer 3a) was measured under conditions where the measurement length was 5 mm, the measurement speed was 0.50 mm/s, and the cutoff λc = 0.80 mm. At this time, three arbitrarily selected points were measured in the laminating direction of the resin-coated metal sheet 1 and three arbitrarily selected points were measured in a direction orthogonal to the laminating direction within the sheet plane, and the average value of the obtained surface roughness Ra data at a total of six points was calculated.

### (4) Acid Value of Polyolefin

After peeling off the resin coating layers 3 and 4 from the resin-coated metal sheet 1 by the same method as in (1), the resin coating layers 3 and 4 were dissolved using hexafluoro-2-propanol (HFIP) as a solvent. After centrifugation of the dissolved resin coating layers 3 and 4, pressure filtration was sequentially performed using filters having pore diameters of 1 µm and 0.1 µm, thereby extracting the polyolefin contained in the first outermost layer 3a of the resin coating layers 3 and 4. Further, Soxhlet extraction using xylene as a solvent was performed on the above filters, thereby additionally extracting the polyolefin after concentration, reprecipitation, and centrifugation. The acid value of the polyolefin extracted as described above was measured in accordance with JIS K5902. In accordance with JIS K5902, a predetermined amount of the polyolefin corresponding to the estimated acid value was weighed into a flask and dissolved in 100 ml of a neutral solvent, and then titrated with a 0.1 mol/L potassium hydroxide standard solution using phenolphthalein as an indicator. The endpoint of neutralization was defined as the point at which the color change of the indicator continued for 30 seconds, and the acid value was calculated according to the following formula. $\left(Acid value\right) = 5.611 \times A \times F / B$
A: amount of 0.1 mol/L potassium hydroxide standard solution used (ml)
B: amount of sample collected (g)
F: factor of the 0.1 mol/L potassium hydroxide standard solution

### (5) Melting Point of Polyolefin

The polyolefin extracted by the same method as in (4) was measured using a differential scanning calorimeter (DSCQ100 manufactured by TA Instruments) under conditions where the atmospheric gas was N₂ with a flow rate of 50 ml/min, the temperature range was from room temperature to 290 °C, and the heating rate was 10 °C/min. Among the obtained heat flow data, the peak top temperature of an endothermic peak in the range of 60 °C to 150 °C was defined as the melting point.

### (6) Weight-Average Molecular Weight of Polyolefin

The polyolefin extracted by the same method as in (4) was measured using a gel permeation chromatograph analyzer (PL-GPC220 manufactured by Agilent) under conditions where the columns were two Agilent PLgel Olexis columns plus a guard column, and the eluent was o-dichlorobenzene. Further, a calibration curve was prepared from the molecular weights and elution times of standard polystyrenes. Using the calibration curve, the weight-average molecular weight of the polyolefin was calculated based on the elution time of the polyolefin.

### (7) Thickness of Each Resin Coating Layer

After peeling off the resin coating layers 3 and 4 from the resin-coated metal sheet 1 by the same method as in (1), Pt coating was applied to the outermost surfaces of the resin coating layers 3 and 4, and the layers were resin-embedded. Thereafter, cross-sections were prepared using an ion milling device (EM TIC 3X manufactured by Leica Microsystems K.K.). For the prepared cross-sections, reflected electron images were observed under two conditions of observation magnification, namely 3500× and 8000×, using a scanning electron microscope (SEM: Regulus8220 manufactured by Hitachi High-Tech Corporation), and the thicknesses of the respective layers of the resin coating layers 3 and 4 were calculated from the observed images.

For the resin-coated metal sheets 1 of Examples 1 to 28 and Comparative Examples 1 to 13, the ink adhesion properties and formability of the resin coating layers 3 and 4 were evaluated by the following methods. The evaluation results are listed in Table 3.

### [Table 3]

**Table 3**

| | Ink adhesion properties | Formability |
|---|---|---|
| Example 1 | A | B |
| Example 2 | A | A |
| Example 3 | A | B |
| Example 4 | B | A |
| Example 5 | A | A |
| Example 6 | A | B |
| Example 7 | B | A |
| Example 8 | A | A |
| Example 9 | B | B |
| Example 10 | B | A |
| Example 11 | A | B |
| Example 12 | A | A |
| Example 13 | A | A |
| Example 14 | B | A |
| Example 15 | A | B |
| Example 16 | B | A |
| Example 17 | A | B |
| Example 18 | B | A |
| Example 19 | A | B |
| Example 20 | A | A |
| Example 21 | A | B |
| Example 22 | A | B |
| Example 23 | B | A |
| Example 24 | B | A |
| Example 25 | A | B |
| Example 26 | A | A |
| Example 27 | A | A |
| Example 28 | A | A |
| Comparative Example 1 | B | D |
| Comparative Example 2 | B | D |
| Comparative Example 3 | D | B |
| Comparative Example 4 | A | D |
| Comparative Example 5 | D | C |
| Comparative Example 6 | D | D |
| Comparative Example 7 | A | D |
| Comparative Example 8 | A | D |
| Comparative Example 9 | B | D |
| Comparative Example 10 | D | A |
| Comparative Example 11 | D | A |
| Comparative Example 12 | D | A |
| Comparative Example 13 | D | A |

### (8) Evaluation of Ink Adhesion Properties

The resin-coated metal sheets 1 of Examples 1 to 28 and Comparative Examples 1 to 13 were subjected to heat treatment in a hot-air drying furnace such that the temperature reached 240 °C in 2 minutes, and then cooled to room temperature. Subsequently, an alkyd-melamine thermosetting ink was printed on the surfaces of the resin coating layers 3 and 4 positioned on the outer surface side of the container after forming, using a universal printing tester manufactured by Kumagai Riki Kogyo Co., Ltd. Immediately thereafter, heat treatment was performed in a hot-air drying furnace such that the temperature reached 200 °C in 1 minute, followed by cooling to room temperature. A scratch test was then performed on the ink-printed surface of the obtained sample along the longitudinal direction of the sample using a load-variable friction and wear tester (HHS2000 manufactured by Shinto Scientific Co., Ltd.). The test conditions were as follows: continuous load from the printed edge of 10 gf to 1000 gf, moving speed of 0.5 mm/sec, moving distance of 30 mm, and use of a sapphire indenter (Φ0.6 mm). Twenty tests were performed for each sample (4 sheets × 5 tests), and the ink peeling load value was calculated from the obtained ink peeling lengths. Data within the 1σ range were extracted from all peeling load value data for each example, and the ink adhesion properties were evaluated.

### Evaluation Criteria for Ink Adhesion Properties

Rating "A": Lower limit value of peeling load within the 1σ range is 100 g or more. No practical problem.

Rating "B": Lower limit value of peeling load within the 1σ range is 70 g or more and less than 100 g. No practical problem.

Rating "C": Lower limit value of peeling load within the 1σ range is 50 g or more and less than 70 g. Practical problem exists.

Rating "D": Lower limit value of peeling load within the 1σ range is less than 50 g. Practical problem exists.

### (9) Evaluation of Formability

After applying wax to the resin-coated metal sheets 1 of Examples 1 to 28 and Comparative Examples 1 to 13, the sheets were punched into circular plates with a diameter of 123 mm, and drawn into a cup shape at a drawing ratio of 1.7 using a cupping press machine. The obtained cup was inserted into a DI forming apparatus, and redraw processing and DI processing were performed at a drawing ratio of 1.3 to form a can having an inner diameter of 52 mm and a can height of 90 mm. After forming the can, the surfaces of the resin coating layers 3 and 4 were visually observed, and the formability was evaluated.

### Evaluation Criteria for Formability

Rating "A": No scraping observed visually at all. No practical problem.

Rating "B": Slight scraping visually observed at a height within 10 mm from the flange portion of the can. No practical problem.

Rating "C": Scraping visually observed at a height exceeding 10 mm and within 30 mm from the flange portion of the can. Practical problem exists.

Rating "D": Scraping reaching a height exceeding 30 mm from the flange portion of the can, or body rupture, visually observed. Practical problem exists.

### INDUSTRIAL APPLICABILITY

According to the present disclosure, it is possible to provide a film for coating a metal sheet and a resin-coated metal sheet, both having excellent ink adhesion properties.

### REFERENCE SIGNS LIST

- 1: Resin-coated metal sheet
- 2: Metal sheet
- 3: Resin coating layer (film for coating metal sheet)
- 4: Resin coating layer
- 3a: First layer (first outermost layer)
- 3b: Second layer (second outermost layer)

## Claims

1. A film for coating a metal sheet mainly composed of a polyester resin, wherein,
the film for coating a metal sheet has a multilayer structure comprising two or more layers, including a first outermost layer and a second outermost layer;
the film has a melting point of 230 °C or higher and 260 °C or lower;
the first outermost layer contains 0.1 mass% or more and 15 mass% or less of slip-promoting inorganic particles of silica with an average particle diameter of 0.2 µm or more and 1.0 µm or less;
the number of the slip-promoting inorganic particles distributed on a surface of the first outermost layer is 400 particles/mm² or more;
surface roughness Ra of the first outermost layer is 0.30 µm or more; and
the first outermost layer contains 0.010 mass% or more and less than 1.0 mass% of a polyolefin as a lubricating component.

2. The film for coating a metal sheet according to claim 1, wherein the polyolefin comprises either or both of an acid-modified polyolefin and an oxidized polyolefin.

3. The film for coating a metal sheet according to claim 1 or 2, wherein the polyolefin has an acid value of 20 mgKOH/g or more and 90 mgKOH/g or less.

4. The film for coating a metal sheet according to any one of claims 1 to 3, wherein the polyolefin has a melting point of 70 °C or higher and 140 °C or lower.

5. The film for coating a metal sheet according to any one of claims 1 to 4, wherein the polyolefin has a weight-average molecular weight of 2,000 or more and 50,000 or less.

6. The film for coating a metal sheet according to any one of claims 1 to 5, wherein, when the film for coating a metal sheet has a two-layer structure, the second outermost layer, and when the film for coating a metal sheet has a structure including three or more layers, an intermediate layer disposed between the first outermost layer and the second outermost layer, contains 10 mass% or more and 40 mass% or less of coloring inorganic particles.

7. The film for coating a metal sheet according to any one of claims 1 to 6, wherein the first outermost layer has a thickness of 1.0 µm or more and 10 µm or less.

8. The film for coating a metal sheet according to claim 6 or 7, wherein the second outermost layer or the intermediate layer containing the coloring inorganic particles has a thickness of 10 µm or more and 20 µm or less.

9. A resin-coated metal sheet, comprising a resin coating layer of the film according to any one of claims 1 to 8 on at least one surface of the metal sheet.

10. The resin-coated metal sheet according to claim 9, wherein the second outermost layer is in contact with the metal sheet.

11. A method of producing a film for coating a metal sheet, which is a method of producing the film for coating a metal sheet according to any one of claims 1 to 8, wherein,
a polyester resin containing the slip-promoting inorganic particles and the polyolefin, which forms the first outermost layer, and a polyester resin forming layers other than the first outermost layer constituting the film for coating a metal sheet are co-extruded using a kneading extruder, formed into a sheet shape through a multilayer die, and discharged;
the obtained sheet is cooled and solidified on a cooling body, and then
a laminated film serving as the film for coating a metal sheet is formed by stretching the sheet one or more times under conditions where a stretching temperature is 80 °C or higher and 100 °C or lower and a stretching ratio is 3.5 times or more and 5.0 times or less.

12. A method of producing a resin-coated metal sheet, which is a method of producing the resin-coated metal sheet according to claim 9 or 10, wherein,
thermocompression bonding is performed with a laminating roll such that the second outermost layer of the film is brought into adhesion with a heated metal sheet.
